# EUROPEAN PATENT APPLICATION

(11) **EP 4 841 219 A1**
(43) Date of publication of application: **18.11.2026**
(21) Application number: 26177720.5
(22) Date of filing: 08.05.2026
(51) Int. Cl.: G01G 19/393

(54) **COMBINATION WEIGHING APPARATUS**

(30) Priority: 15.05.2025 JP 2025081817
(71) Applicant: Ishida Co., Ltd., Kyoto 606-8392 (JP)
(72) Inventor: KISHIKAWA, Mikio, Ritto-shi, Shiga, 520-3026 (JP)
(74) Representative: Gill Jennings & Every LLP

(57) **Abstract**

A combination weighing apparatus includes a plurality of weigh hoppers that temporarily retain and discharge goods, weight detectors that measure the weights of the goods in the weigh hoppers, and a microcomputer. The microcomputer uses the weighing results to perform a combination calculation to decide on the weigh hoppers from which to discharge the goods. The microcomputer determines that the number of the goods in the weigh hopper is four when the weight of the goods in the weigh hopper is in weight range D1. The microcomputer determines that the number of the goods in the weigh hopper is five when the weight of the goods in the weigh hopper is in weight range E1. When there is a weight range T between weight range D1 and weight range E1 and the weight of the goods in the weigh hopper is in weight range T, the microcomputer performs the combination calculation without using the weighing result of the goods in that weigh hopper.

## Description

### BACKGROUND

### Technical Field

This invention relates to a combination weighing apparatus.

### Related Art

Patent document 1 (JP-A No. 2003-240629) describes an apparatus that weighs a plurality of goods with varying weights and combines them to achieve a predetermined target number. In this apparatus, in order to accurately convert the weights of the goods weighed in each hopper (retention unit) to numbers of the goods, conventionally the number of the goods supplied to each hopper has been restricted to three or less, for example. This is because when many goods are supplied to one hopper, for example, when five or six goods are supplied to one hopper, there is the potential for the number of the goods to be five and the potential for the number of the goods to be six, and the apparatus becomes unable to perform accurate conversions.

### SUMMARY

### Technical Problem

In the above combination weighing apparatus, depending on what the target number for the combination is set to, the problem arises that there may be a large number of hoppers selected in a combination, so that the number of hoppers that can participate in the next combination process becomes too small, the combination process is not completed, and, as a result, the capacity of the apparatus is reduced.

It is a problem of this invention to inhibit the combination process from not succeeding and improve the capacity of a combination weighing apparatus.

### Solution to Problem

A combination weighing apparatus pertaining to a first aspect includes a plurality of retention units, weighing units, and a control unit. The retention units temporarily retain and discharge goods. The weighing units measure the weights of the goods retained in the plurality of retention units. The control unit uses the weighing results of the weighing units to perform a combination calculation to decide on one or a plurality of the retention units from which to discharge the goods. The control unit determines that the number of the goods retained in the retention unit is N when the weight of the goods retained in the retention unit is in a first range. The control unit determines that the number of the goods retained in the retention unit is (N + 1) when the weight of the goods retained in the retention unit is in a second range. When there is a third range between the first range and the second range and the weight of the goods retained in the retention unit is in the third range, the control unit performs the combination calculation without using the weighing result of the goods retained in the retention unit in which the weight is in the third range.

Here, when the weight of the goods retained in the retention unit is in the third range, the control unit performs the combination calculation without using the weighing result of the goods retained in that retention unit. Because of this, even when the restriction on the number of the goods supplied to the retention units is relaxed to increase the number of the goods supplied to one retention unit, accuracy in determining the number of the goods from the weight of the goods can be ensured. Furthermore, since the restriction on the number of the goods supplied to the retention units can be relaxed to increase the number of the goods supplied to one retention unit, the probability that the combination calculation process will succeed increases, and the capacity of the combination weighing apparatus is ensured.

A combination weighing apparatus pertaining to a second aspect is the combination weighing apparatus of the first aspect, wherein the third range is a range in which an N estimation range overlaps with an (N + 1) estimation range. The N estimation range is a range of weights of the goods in which the number of the goods retained in the retention unit is estimated to be N. The (N + 1) estimation range is a range of weights of the goods in which the number of the goods retained in the retention unit is estimated to be (N + 1). N is an integer equal to or greater than 1.

When the range in which the number of the goods retained in the retention unit is estimated to be N overlaps with the range in which the number of the goods retained in the retention unit is estimated to be (N + 1), it is difficult for the control unit to accurately determine the number of the goods from the weight of the goods in that overlapping third range. However, in the combination weighing apparatus pertaining to the second aspect, when the weight of the goods retained in the retention unit is in the third range, the control unit performs the combination calculation without using the weighing result of the goods retained in that retention unit. For this reason, the determination accuracy of the control unit that determines the number of the goods from the weight of the goods can be ensured.

It will be noted that in the combination weighing apparatus pertaining to the second aspect, the first range is included in the N estimation range excluding the third range, and the second range is included in the (N + 1) estimation range excluding the third range.

A combination weighing apparatus pertaining to a third aspect is the combination weighing apparatus of the first aspect or the second aspect, further including supply units. The supply units supply the goods to the plurality of retention units. The control unit performs the combination calculation so that the total number of the goods discharged from one or a plurality of the retention units is a target number. Furthermore, the control unit causes the goods to be discharged from one or a plurality of the retention units based on the result of the combination calculation. The average number of the goods supplied to each of the retention units from the supply units in a predetermined time period is 2 times to 5 times a value obtained by dividing the target number by the number of the retention units.

In the combination weighing apparatus pertaining to the third aspect, the ratio of the value obtained by dividing the target number in the combination calculation by the number of the retention units to the average number of the goods supplied from the supply units to each of the retention units in the predetermined time period is 1:2 to 1:5.

In the conventional combination weighing apparatus, the accuracy with which it converts the weights of the goods to numbers of the goods is improved by reducing the number of the goods supplied to each of the retention units, but as described above, the capacity of the combination weighing apparatus is reduced when the target number in the combination calculation is large.

However, in the combination weighing apparatus pertaining to the third aspect, the control unit performs the combination calculation without using the weighing result of the goods in the retention unit in which the weight of the goods is in the third range, so the average number of the goods supplied from the supply units to each of the retention units in the predetermined time period can be increased relative to the target number in the combination calculation. Because of that, accuracy in determining the number of the goods from the weight of the goods can be ensured, and the capacity of the combination weighing apparatus can be ensured.

A combination weighing apparatus pertaining to a fourth aspect is the combination weighing apparatus of any of the first aspect to the third aspect, wherein the target number is the same as or greater than the number of the retention units.

A combination weighing apparatus pertaining to a fifth aspect is the combination weighing apparatus of any of the first aspect to the fourth aspect, wherein when the weight of the goods retained in the retention unit is in the third range, the control unit discharges the goods retained in the retention unit whose weight is in the third range as nonconforming goods from the retention unit.

Here, when the weight of the goods is in the third range in which the control unit does not know whether it should determine the number of the goods to be N or determine the number of the goods to be (N + 1), the control unit discharges the goods as nonconforming goods from the retention unit in which those goods are retained. Because of this, a situation where an incorrect number of the goods are discharged as a normal group of the goods from the combination weighing apparatus can be prevented.

A combination weighing apparatus pertaining to a sixth aspect is the combination weighing apparatus of the fifth aspect, wherein when the weight of the goods retained in the retention unit is in the third range, the control unit discharges the goods retained in the retention unit whose weight is in the third range as nonconforming goods from the retention unit before performing the combination calculation.

Here, when the weight of the goods retained in the retention unit is in the third range, the control unit immediately discharges the nonconforming goods from the retention unit, so the probability that the combination process thereafter will not succeed can be reduced, and the capacity of the combination weighing apparatus can be ensured.

### Advantageous Effects of Invention

In the combination weighing apparatus pertaining to this invention, even when the restriction on the number of the goods supplied to the retention units is relaxed to increase the number of the goods supplied to one retention unit, accuracy in determining the number of the goods from the weight of the goods can be ensured. Furthermore, the restriction on the number of the goods supplied to the retention units can be relaxed to increase the number of the goods supplied to one retention unit, and because of that, the probability that the combination calculation process will succeed can be increased, and the capacity of the combination weighing apparatus is improved.

### BRIEF DESCRIPTION OF THE DRAWINGS

FIG. 1 is a drawing showing the layout of parts of a combination weighing apparatus as viewed in a side view;
FIG. 2 is a top view of the combination weighing apparatus;
FIG. 3 is a block diagram relating to a weighing process performed by the combination weighing apparatus;
FIG. 4 is a table showing an example of numbers of goods in weigh hoppers and weight ranges;
FIG. 5 is a frequency distribution table relating to the numbers of the goods in the weigh hoppers;
FIG. 6 is a flowchart of the weighing process;
FIG. 7A is a drawing showing an example of changes in the numbers of the goods in the weigh hoppers of this invention;
FIG. 7B is a drawing showing an example of changes in the numbers of the goods in the weigh hoppers of this invention;
FIG. 7C is a drawing showing an example of changes in the numbers of the goods in the weigh hoppers of this invention;
FIG. 7D is a drawing showing an example of changes in the numbers of the goods in the weigh hoppers of this invention;
FIG. 7E is a drawing showing an example of changes in the numbers of the goods in the weigh hoppers of this invention;
FIG. 7F is a drawing showing an example of changes in the numbers of the goods in the weigh hoppers of this invention;
FIG. 8A is a drawing showing an example of changes in the numbers of the goods in conventional weigh hoppers;
FIG. 8B is a drawing showing an example of changes in the numbers of the goods in the conventional weigh hoppers;
FIG. 8C is a drawing showing an example of changes in the numbers of the goods in the conventional weigh hoppers; and
FIG. 8D is a drawing showing an example of changes in the numbers of the goods in the conventional weigh hoppers.

### DETAILED DESCRIPTION

An embodiment of this invention will be described below with reference to the drawings. It will be noted that the following embodiment is a specific example of this invention and is not intended to limit the technical scope of this invention.

### (1) Basic Configuration of Combination Weighing Apparatus

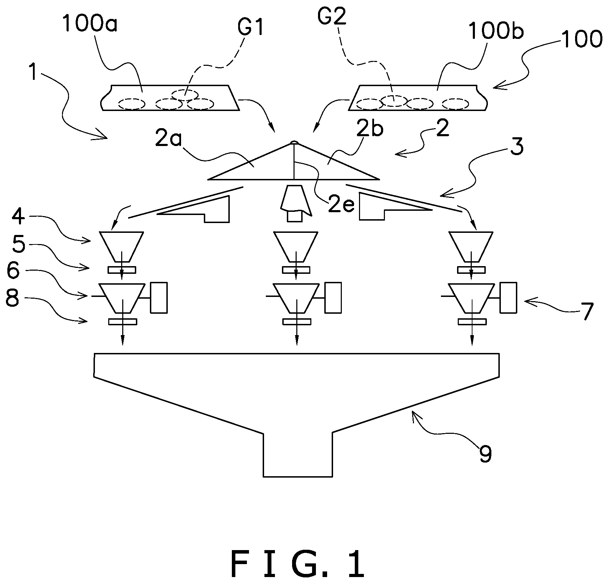

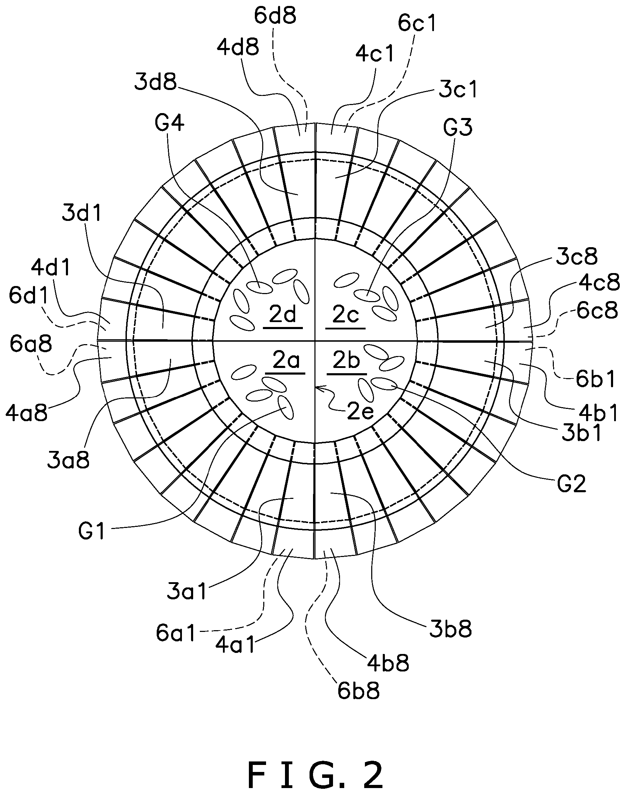

FIG. 1 is a drawing showing the layout of main parts of a combination weighing apparatus 1 pertaining to an embodiment of this invention as viewed in a side view. The combination weighing apparatus 1 mixes a plurality of products in a specified ratio in one machine and collectively discharges a determined number of the products to another apparatus downstream. The combination weighing apparatus 1 includes one dispersion unit 2, thirty-two vibratory feeders 3, thirty-two pool hoppers 4, thirty-two gates 5, thirty-two weigh hoppers 6, thirty-two weight detectors 7, thirty-two discharge gates 8, and one collection chute 9. The dispersion unit 2 is conical and positioned in the central upper portion of the combination weighing apparatus 1. As shown in FIG. 2, the dispersion unit 2 is divided in four (a first dispersion unit 2a to a fourth dispersion unit 2d) by a partition plate 2e.

Above each of the first dispersion unit 2a to the fourth dispersion unit 2d are disposed four belt conveyors 100 (a first belt conveyor 100a to a fourth belt conveyor 100d), which are apparatus upstream of the combination weighing apparatus 1, and goods are supplied from the belt conveyors 100 to the dispersion unit 2. First goods G1 are supplied from the first belt conveyor 100a to the first dispersion unit 2a, second goods G2 are supplied from the second belt conveyor 100b to the second dispersion unit 2b, third goods G3 are supplied from the third belt conveyor 100c to the third dispersion unit 2c, and fourth goods G4 are supplied from the fourth belt conveyor 100d to the fourth dispersion unit 2d (see FIG. 2).

The combination weighing apparatus 1 simultaneously discharges a predetermined number of each of the first goods G1, the second goods G2, the third goods G3, and the fourth goods G4 at a time. The group of goods it discharges to the other apparatus downstream are, for example, a set of four types of candies. Here, the first goods G1 are melon flavored candies, the second goods G2 are orange flavored candies, the third goods G3 are lemon flavored candies, and the fourth goods G4 are apple flavored candies.

The thirty-two vibratory feeders 3 are radially disposed around the dispersion unit 2. As shown in FIG. 2, eight vibratory feeders 3a1 to 3a8 are positioned downstream of the first dispersion unit 2a, eight vibratory feeders 3b1 to 3b8 are positioned downstream of the second dispersion unit 2b, eight vibratory feeders 3c1 to 3c8 are positioned downstream of the third dispersion unit 2c, and eight vibratory feeders 3d1 to 3d8 are positioned downstream of the fourth dispersion unit 2d.

The thirty-two pool hoppers 4, the thirty-two gates 5, the thirty-two weigh hoppers 6, the thirty-two weight detectors 7, and the thirty-two discharge gates 8 are, as shown in FIG. 1, disposed under the thirty-two vibratory feeders 3. As shown in FIG. 2, eight pool hoppers 4a1 to 4a8 are positioned under the vibratory feeders 3a1 to 3a8, eight pool hoppers 4b1 to 4b8 are positioned under the vibratory feeders 3b1 to 3b8, eight pool hoppers 4c1 to 4c8 are positioned under the vibratory feeders 3c1 to 3c8, and eight pool hoppers 4d1 to 4d8 are positioned under the vibratory feeders 3d1 to 3d8. The thirty-two gates 5, the thirty-two weigh hoppers 6, the thirty-two weight detectors 7, and the thirty-two discharge gates 8 are also similarly positioned under the thirty-two pool hoppers 4.

The vibratory feeders 3 drop the goods that have moved thereto from the dispersion unit 2 to the pool hoppers 4 provided downstream. The lower portions of the pool hoppers 4 are opened and closed by the gates 5. The pool hoppers 4 hold the goods when the gates 5 are closed and drop the goods when the gates 5 are open.

The weigh hoppers 6, which function as retention units for the goods, are positioned downstream of the gates 5 and temporarily hold the goods input from the pool hoppers 4. The weight detectors 7, which function as weighing units, are mounted to each of the weigh hoppers 6 and detect the weights of the goods held in the weigh hoppers 6. The lower portions of the weigh hoppers 6 are opened and closed by the discharge gates 8. The weigh hoppers 6 hold the goods when the discharge gates 8 are closed and discharge (drop) the goods when the discharge gates 8 are open.

The collection chute 9 is funnel-shaped, receives in its upper opening the goods discharged from the weigh hoppers 6, collects the goods, and discharges the goods to the other apparatus below it. Generally, a packaging apparatus (other apparatus) that packages the discharged group of goods in a packaging material is positioned under the collection chute 9.

### (2) Configurations Pertaining to Weighing Process in Combination Weighing Apparatus

The combination weighing apparatus 1 can perform both a weighing process in which it performs a combination calculation so that the weights of the discharged group of goods fall within a predetermined range and a weighing process in which it performs a combination calculation so that the numbers of the discharged group of goods fall within a predetermined range, but here the latter weighing process will be described.

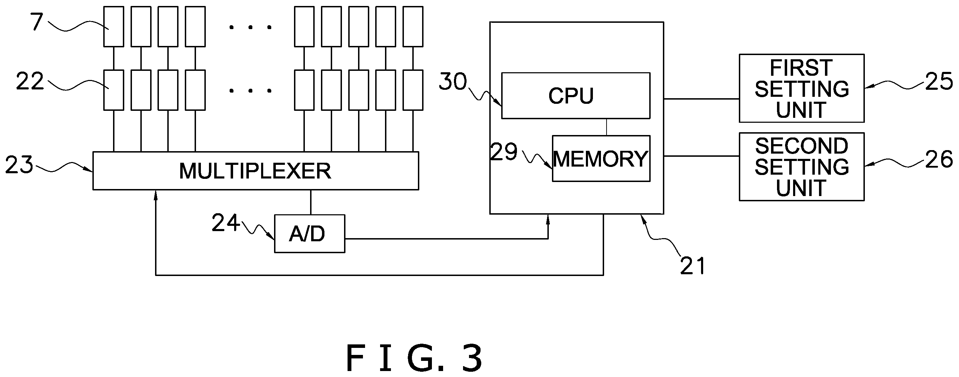

FIG. 3 is a block diagram showing configurations relating to the weighing performed by the combination weighing apparatus 1. Turning now to FIG. 3, weigh signals from the weight detectors 7 are input via signal processing circuits 22 to a multiplexer 23. The multiplexer 23 receives a selection signal from a microcomputer 21, selects weigh signals from the weight detectors 7, and outputs them to an A/D converter 24. Weigh signals that have been digitally converted by the A/D converter 24 are input to the microcomputer 21.

The microcomputer 21, which functions as a control unit of the combination weighing apparatus 1, has a CPU 30 and a memory 29 such as a RAM and a ROM. The microcomputer 21 functions as a control unit that controls each part of the combination weighing apparatus 1 as a result of the CPU 30 executing a program stored in the memory 29.

Various setting units that set parameters of the combination weighing apparatus are connected to the microcomputer 21. A first setting unit 25 is an input unit that allows the user to set target numbers for combinations of each of the goods (the first goods G1, the second goods G2, the third goods G3, and the fourth goods G4). The second setting unit 26 is an input unit that allows the user to set the individual weights of each of the goods. The first setting unit 25 and the second setting unit 26 are configured by a touch panel display, and the like.

### (3) Determination of Number of Goods in Each Weigh Hopper in Weighing Process (Number Conversion)

The microcomputer 21 divides the weight value of the goods that was calculated based on the weigh signal from each of the weight detectors 7 by the individual weight that was set by the second setting unit 26 to find the number of the goods in each weigh hopper 6 and stores the number in the memory 29. More specifically, the microcomputer 21 uses the following equations 1 and 2 to calculate weight ranges W1 (g) to W2 (g) for determining that the number of the goods in the weigh hopper 6 is N based on the individual weight and standard deviation. Equation 1: $W 1 = N * X - \sqrt{\left(N\right) * 3 * σ}$$W 2 = N * X + \sqrt{\left(N\right) * 3 * σ}$

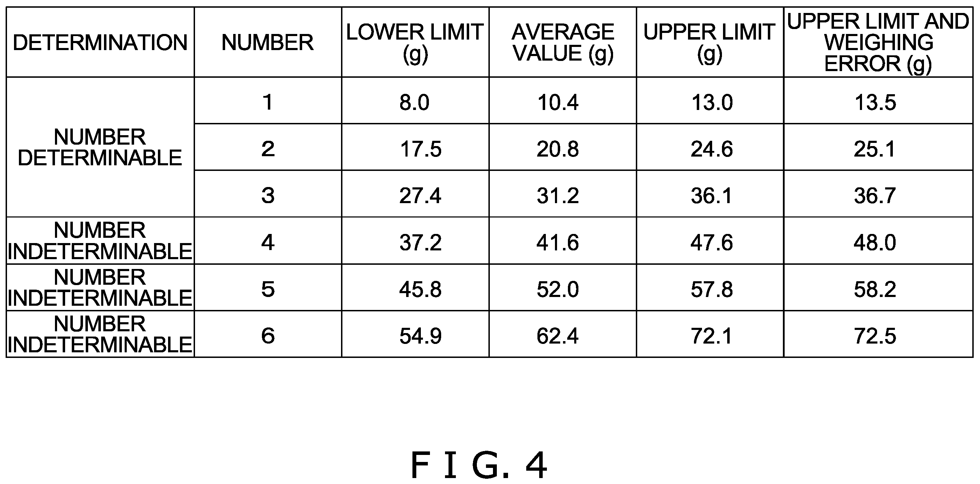

For example, if the individual weight of the goods is 10.4 (g), the lower limits and the upper limits of weight ranges for determining that the number of the goods in the weigh hopper 6 is 1 to 6 roughly become values such as shown in FIG. 4. It will be noted that although FIG. 4 shows "Number Indeterminable," this means that the weight range from the lower limit to the upper limit for the number "4" overlaps with the weight range from the lower limit to the upper limit for the number "5" and that the number cannot be determined when the weight value of the goods falls within this overlapping range. In this invention, as described below, goods falling within these number-indeterminable weight ranges are treated as nonconforming goods, and those goods are excluded from the combination target to ensure accuracy in the number determination.

Furthermore, the microcomputer 21 may further calculate the weight ranges in consideration of measurement error in the weigh values obtained by the weight detectors 7. The rightmost column in the table of FIG. 4 shows numerical values in consideration of measurement error (weighing error) in the weigh values. However, if the weighing error is small enough to be ignorable, it is not necessary to use the numerical values in the rightmost column in the table of FIG. 4.

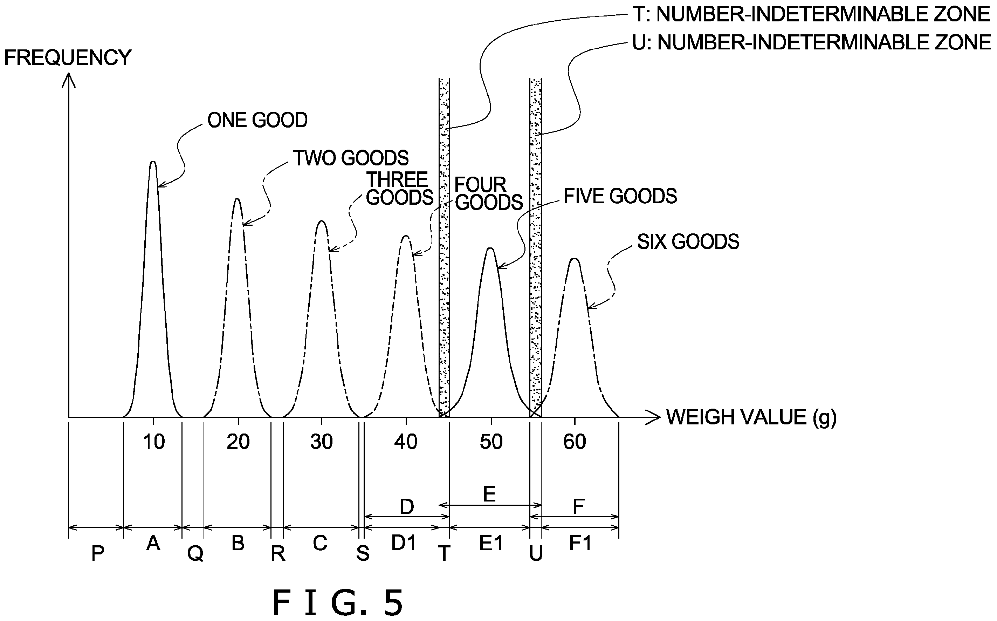

FIG. 5 shows an example of the relationship between the numbers of the goods in the weigh hopper 6 when it is assumed that the individual weight of the goods is 10 (g) and the corresponding weight ranges. When there is a weigh value (weight value) in weight range A in FIG. 5, the number of the goods in the weigh hopper 6 is one; when there is a weigh value in weight range B, the number of the goods in the weigh hopper 6 is two; when there is a weigh value in weight range C, the number of the goods in the weigh hopper 6 is three; when there is a weigh value in weight range D1, the number of the goods in the weigh hopper 6 is four; when there is a weigh value in weight range E1, the number of the goods in the weigh hopper 6 is five; and when there is a weigh value in weight range F1, the number of the goods in the weigh hopper 6 is six. Here, the vibratory feeders 3 are controlled so that the number of the goods in each of the weigh hoppers 6 does not exceed six, so the weigh value does not become a value exceeding weight range F1. Furthermore, when there is a weigh value in weight range P, the number of the goods in the weigh hopper 6 is zero, and the probability that a weigh value (weight value) will fall in any of weight ranges Q, R, and S is substantially zero as is apparent from the frequency distribution.

Weight range D1 is a range obtained by excluding weight range T from weight range D. Weight range D is a weight range whose upper limit and lower limit are determined by above equations 1 and 2 for determining that the number of the goods in the weigh hopper 6 is four. Weight range T is a weight range that is within weight range D and overlaps with weight range E whose upper limit and lower limit are determined by above equations 1 and 2 for determining that the number of the goods in the weigh hopper 6 is five. In other words, weight range T is a weight range in which weight range D overlaps with weight range E. When there is a weigh value in weight range T, the microcomputer 21 cannot determine whether the number of the goods in the weigh hopper 6 is four or five. For this reason, weight range D1 for determining that the number of the goods in the weigh hopper 6 is four is set to a range obtained by excluding weight range T from weight range D in which the number of the goods in the weigh hopper 6 is estimated to be four. Similarly, weight range E1 for determining that the number of the goods in the weigh hopper 6 is five is set to a range obtained by excluding weight range T and weight range U from weight range E in which the number of the goods in the weigh hopper 6 is estimated to be five, and weight range F1 for determining that the number of the goods in the weigh hopper 6 is six is set to a range obtained by excluding weight range U from weight range F in which the number of the goods in the weigh hopper 6 is estimated to be six.

In the way described above, the weight ranges for determining that the number of the goods in the weigh hopper 6 is one to six are determined as weight ranges A, B, C, D1, E1, and F1. Additionally, weight range T positioned between weight ranges D1 and E1 and weight range U positioned between weight ranges E1 and F1 are number-indeterminable zones in which the number of the goods cannot be determined. As described below, in order to keep the weigh values from falling into these number-indeterminable zones (weight ranges T and U), conventionally, the vibratory feeders and other parts have been controlled so that no more than three goods are supplied to each of the weigh hoppers, but this embodiment adopts a method in which, when a weigh value falls in the number-indeterminable zones (weight ranges T and U), the goods in that weigh hopper 6 are identified as nonconforming goods.

### (4) Flow of Weighing Process

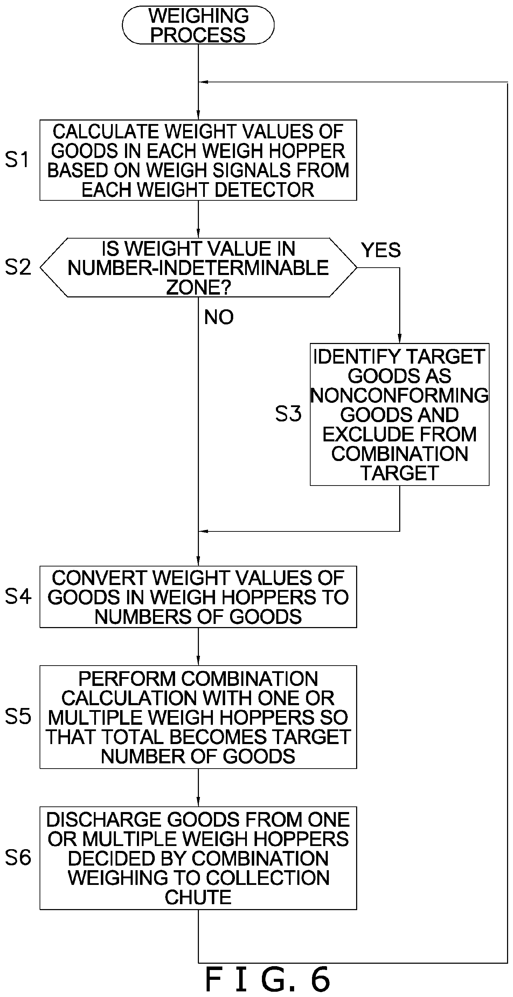

FIG. 6 shows the flow of the weighing process performed by the microcomputer 21 of the combination weighing apparatus 1. In this embodiment, description will be given taking as an example what is called a mixed weighing process, in which the combination weighing apparatus 1 simultaneously discharges a predetermined number of each of the first goods G1, the second goods G2, the third goods G3, and the fourth goods G4 at a time. As shown in FIG. 1 and FIG. 2, the thirty-two weigh hoppers 6 are differentiated into the eight weigh hoppers 6a1 to 6a8 to which the first goods G1 are supplied, the eight weigh hoppers 6b1 to 6b8 to which the second goods G2 are supplied, the eight weigh hoppers 6c1 to 6c8 to which the third goods G3 are supplied, and the eight weigh hoppers 6d1 to 6d8 to which the fourth goods G4 are supplied, and the numbers of the goods therein are determined by the microcomputer 21.

The weighing process by the microcomputer 21 is the same no matter which of the four goods G1, G2, G3, and G4 are supplied to the weigh hoppers 6, so here the weighing process will be described taking as an example the eight weigh hoppers 6c1 to 6c8 to which the third goods G3 (which may be abbreviated simply as "the goods" below) are supplied.

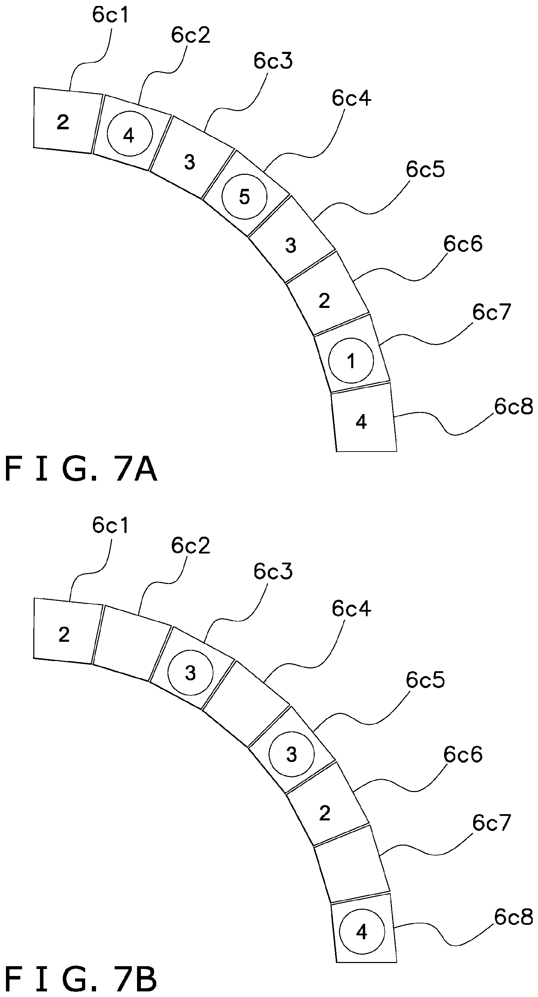

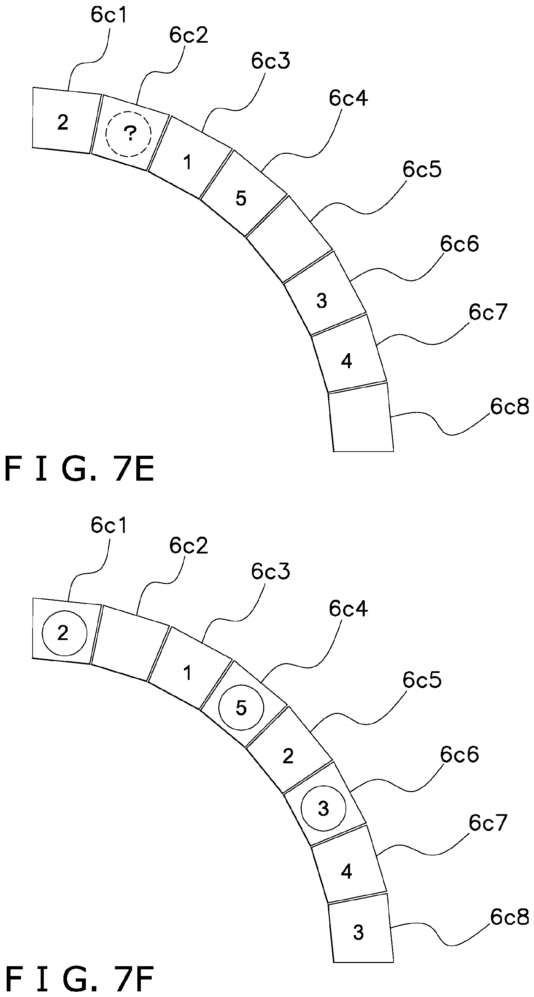

In step S1 shown in FIG. 6, the microcomputer 21 first calculates the weight values of the goods that have been supplied to each of the weigh hoppers 6c1 to 6c8 based on the weigh signals from each of the weight detectors 7 corresponding to the weigh hoppers 6c1 to 6c8. Next, in step S2, the microcomputer 21 determines whether each of the weight values is in the number-indeterminable zones (see weight ranges T and U in FIG. 5). If there are goods (the goods in the weigh hoppers 6) with a weight value in the number-indeterminable zones, those goods are identified as nonconforming goods to be excluded from the target of the combination weighing (step S3). The microcomputer 21 converts the weight values of the goods in the weigh hoppers 6 to numbers of the goods based on the other weight values excluding the weight values of the goods that were identified as nonconforming goods (step S4). The conversion by the microcomputer 21 is performed using above equations 1 and 2. Because of this, for example, as shown in FIG. 7A, the numbers of the goods in each of the weigh hoppers 6c1 to 6c8 are determined by the microcomputer 21 to be two, four, three, five, three, two, one, and four. Since the more specific method of determining the numbers of the goods was described in section (3) above, description thereof will be omitted here.

Next, in step S5, the microcomputer 21 calculates, based on the numbers of the goods in each of the weigh hoppers 6c1 to 6c8 stored in the memory 29, a combination of the weigh hoppers 6c1 to 6c8 with which the total number of the retained goods becomes the target number of the goods (the third goods G3). If the target number of the third goods G3 is set to ten, for example, the microcomputer 21 extracts a combination of the three weigh hoppers 6c2, 6c4, and 6c7 as indicated by the circles in FIG. 7A.

When the combination calculation for the number of the goods ends and the combination of the weigh hoppers 6c1 to 6c8 corresponding thereto is extracted and decided on, the microcomputer 21 causes the goods to be discharged from the decided combination of the weigh hoppers 6 (one or a plurality of the weigh hoppers 6) to the collection chute 9. It will be noted that in addition to the target number of the third goods G3, the microcomputer 21 simultaneously causes target numbers of the other first goods G1, second goods G2, and fourth goods G4 to be discharged from other combinations of the weigh hoppers 6 to the collection chute 9. Because of this, the target numbers of the first goods G1, the second goods G2, the third goods G3, and the fourth goods G4 are discharged via the collection chute 9 to the packaging apparatus or the like located downstream.

### (5) Characteristics of Combination Weighing Apparatus

(5-1)
The microcomputer 21 functioning as a control unit in the combination weighing apparatus 1 calculates the weight values of the goods in each of the weigh hoppers 6 based on the weigh signals from the weight detectors 7 corresponding to each of the weigh hoppers 6. Then, the microcomputer 21 uses the weighing results of the weight detectors 7 to perform a combination calculation to decide on one or a plurality of the weigh hoppers 6 from which to discharge the goods.

Prior to performing the combination calculation, the microcomputer 21 converts the weight values of the goods in each of the weigh hoppers 6 to numbers of the goods. As shown in FIG. 5, when the weight value of the goods retained in the weigh hopper 6 is in weight range D1, the microcomputer 21 determines that the number of the goods retained in the weigh hopper 6 is four. Furthermore, when the weight value of the goods retained in the retention unit is in weight range E1, the microcomputer 21 determines that the number of the goods retained in the weigh hopper 6 is five. Moreover, when there is weight range T between weight range D1 and weight range E1 and there is a weight value of the goods in weight range T, the microcomputer 21 performs the combination calculation without using the weighing result (weight value) of the goods retained in the weigh hopper 6 in which the weight value is in weight range T.

In this way, if the weight value of the goods retained in the weigh hopper 6 is in weight range T, the microcomputer 21 performs the combination calculation without using the weighing result of the goods retained in that weigh hopper 6, so the combination weighing apparatus 1 can relax the restriction on the number of the goods supplied to each of the weigh hoppers 6. Specifically, conventionally the number of the goods supplied to each of the weigh hoppers 6 had been regulated to a maximum of three, but the combination weighing apparatus 1 pertaining to this embodiment allows up to six of the goods to be supplied to each of the weigh hoppers 6. Because of this, the number of the goods supplied to one weigh hopper 6 is increased to a maximum of six, but when the weight value of the goods retained in the weigh hopper 6 is in weight range T or U, the combination calculation is performed without using that weight value as described above, so accuracy in converting the weights of the goods to numbers of the goods is ensured.

Furthermore, since the combination weighing apparatus 1 can increase the number of the goods supplied to one retention unit by relaxing the restriction on the number of the goods supplied to the weigh hopper 6, the probability that the combination calculation process will succeed increases, and the capacity of the combination weighing apparatus 1 is ensured.

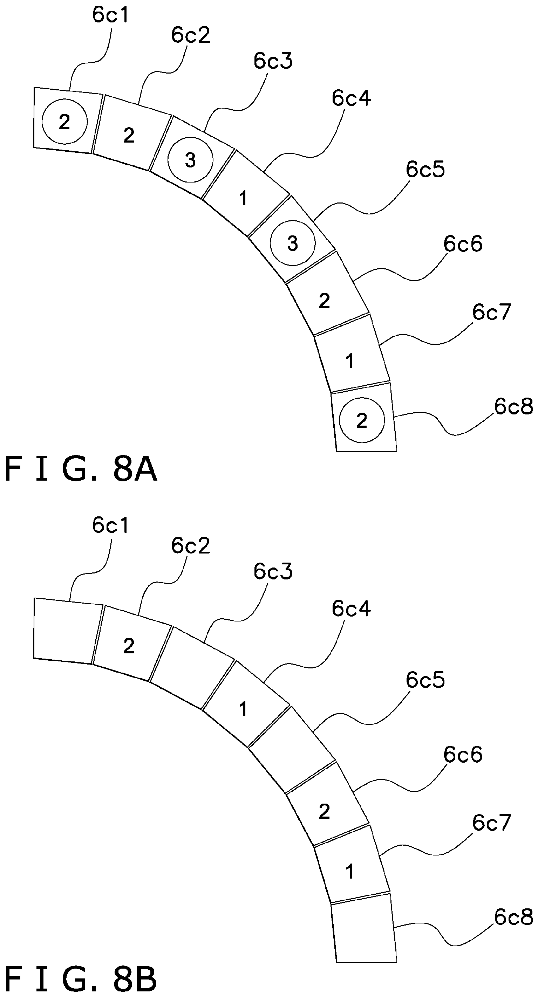

In relation to the capacity of the combination weighing apparatus 1, FIG. 7A to FIG. 7D show an example of changes in the combination calculation in the case of the combination weighing apparatus 1 pertaining to this embodiment, and FIG. 8A to FIG. 8D show an example of changes in the combination calculation in a case where the conventional method of controlling a combination weighing apparatus is adopted.

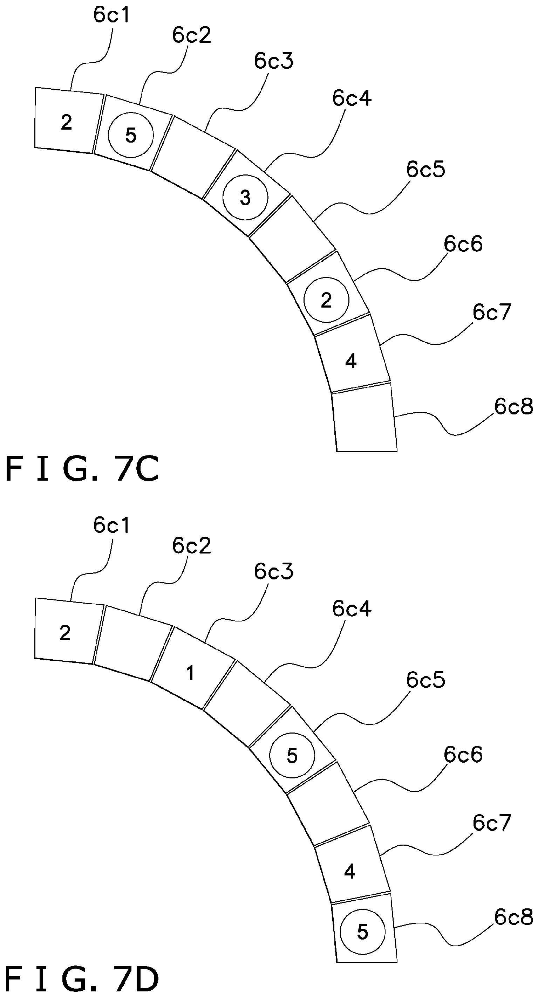

The combination weighing apparatus 1 allows up to six of the goods to be supplied to each of the weigh hoppers 6, so, for example, two, four, three, five, three, two, one, and four goods are respectively supplied to the eight weigh hoppers 6c1 to 6c8 (see FIG. 7A). As indicated by the circles in FIG. 7A, in the combination weighing apparatus 1, for example the three weigh hoppers 6c2, 6c4, and 6c7 are selected as the combination of the weigh hoppers 6 that result in the target number of ten. Then, when the goods are discharged from those weigh hoppers 6c2, 6c4, and 6c7, as shown in FIG. 7B, the eight weigh hoppers 6c1 to 6c8 just after that have two, zero, three, zero, three, two, zero, and four goods, respectively. In this state also the combination calculation process will succeed, and the microcomputer 21 selects for example the three weigh hoppers 6c3, 6c5, and 6c8 as the combination of the weigh hoppers 6 that result in the target number of ten. When the goods are discharged from these weigh hoppers 6c3, 6c5, and 6c8, the weigh hoppers 6c3, 6c5, and 6c8 become empty, but since the weigh hoppers 6c2, 6c4, and 6c7 that had been empty were supplied with next goods, as shown in FIG. 7C, the eight weigh hoppers 6c1 to 6c8 come to have two, five, zero, three, zero, two, four and zero goods, respectively. Since in this state also the combination calculation process will succeed, the microcomputer 21 selects for example the three weigh hoppers 6c2, 6c4, and 6c6 as the next combination of the weigh hoppers 6 that result in the target number of ten. After the goods are discharged from these weigh hoppers 6c2, 6c4, and 6c6, the weigh hoppers 6c1 to 6c8 come to have the numbers of the goods shown in FIG. 7D, and here also the combination calculation process will not fail. In this way, in the combination weighing apparatus 1 pertaining to this embodiment, the probability that the combination calculation process will succeed becomes very high.

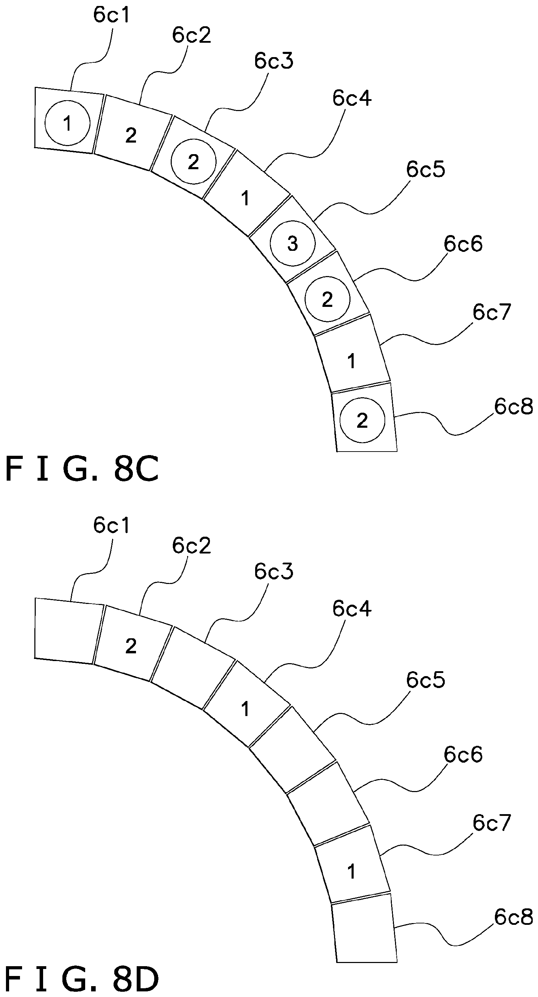

By contrast, in a case where the conventional method of controlling a combination weighing apparatus is adopted, the number of the goods supplied to each of the weigh hoppers 6 is regulated to a maximum of three, so, for example, two, two, three, one, three, two, one, and two goods are respectively supplied to the eight weigh hoppers 6c1 to 6c8 (see FIG. 8A). As indicated by the circles in FIG. 8A, also in a case where the conventional method of controlling a combination weighing apparatus is adopted, the weigh hoppers 6c1, 6c3, 6c5, and 6c8 can be selected as the combination of the weigh hoppers 6 that result in the target number of ten. However, when the goods are discharged from these weigh hoppers 6c1, 6c3, 6c5, and 6c8, those weigh hoppers 6c1, 6c3, 6c5, and 6c8 become empty, and as shown in FIG. 8B, the eight weigh hoppers 6c1 to 6c8 just after that have zero, two, zero, one, zero, two, one, and zero goods, respectively. In this state, the combination calculation process will not succeed, so the empty weigh hoppers 6c1, 6c3, 6c5, and 6c8 must wait for the goods to be supplied to them. Thereafter, when the goods are supplied to the weigh hoppers 6c1, 6c3, 6c5, and 6c8, as shown in FIG. 8C, the eight weigh hoppers 6c1 to 6c8 have one, two, two, one, three, two, one, and two goods, respectively. In this state, the combination will succeed, and the weigh hoppers 6c1, 6c3, 6c5, 6c6, and 6c8 can be selected and the target number of ten goods can be discharged from them. However, just after the weigh hoppers 6c1, 6c3, 6c5, 6c6, and 6c8 become empty, as shown in FIG. 8D, just the three weigh hoppers 6c2, 6c4, and 6c7 have two, one, and one good, respectively, and again the combination weighing apparatus falls into a state in which the combination calculation process will not succeed. In this way, in a case where the conventional method of controlling a combination weighing apparatus is adopted, the combination weighing apparatus often falls into a state in which the combination calculation process will not succeed, and each time, there arises a time in which the weigh hoppers wait for the goods to be supplied to them, so the capacity of the combination weighing apparatus is reduced.

(5-2)
The combination weighing apparatus 1 pertaining to this embodiment uses equations 1 and 2 to associate the weight values of the goods in the weigh hoppers 6 with the numbers of the goods in the weigh hoppers 6 and calculate the numbers of the goods in the weigh hoppers 6 from the weight values of the goods in the weigh hoppers 6. This means that it uses equations 1 and 2 to calculate the lower limit and the upper limit of each of the weight ranges shown in FIG. 4, and in the combination weighing apparatus 1, weight ranges for estimating the numbers of the goods in the weigh hoppers 6 to be one to six are determined as the weight ranges A, B, C, D, E, and F.

Additionally, the combination weighing apparatus 1 handles, as a number-indeterminable zone in which it cannot determine the number of the goods, weight range T, which is a range in which weight range D in which the number of the goods in the weigh hopper 6 is estimated to be four overlaps with weight range E in which the number of the goods in the weigh hopper 6 is estimated to be five. This is because when there is a weight value in weight range T, it cannot be determined whether the number of the goods in the weigh hopper 6 is four or five. Similarly, the combination weighing apparatus 1 handles, as a number-indeterminable zone, weight range U, which is a range in which weight range E in which the number of the goods in the weigh hopper 6 is estimated to be five overlaps with weight range F in which the number of the goods in the weigh hopper 6 is estimated to be six. The goods in the weigh hopper 6 whose weight value falls in weight range T or U, which are number-indeterminable zones, are identified by the microcomputer 21 as nonconforming goods. The goods that have been identified as nonconforming goods may be discharged as a group of nonconforming goods via the collection chute 9 to a downstream apparatus after goods in several of the weigh hoppers 6 have been identified as nonconforming goods or may be immediately discharged as nonconforming goods to a downstream apparatus.

Moreover, in the combination weighing apparatus 1, weight range D1 for determining that the number of the goods in the weigh hopper 6 is four is set to a range obtained by excluding weight range T from weight range D in which the number of the goods in the weigh hopper 6 is estimated to be four, weight range E1 for determining that the number of the goods in the weigh hopper 6 is five is set to a range excluding weight ranges T and U from weight range E in which it is estimated that the number of the goods in the weigh hopper 6 is five, and weight range F1 for determining that the number of the goods in the weigh hopper 6 is six is set to a range obtained by excluding weight range U from weight range F in which it is estimated that the number of the goods in the weigh hopper 6 is six.

As described above, when the weight values of the goods retained in the weigh hoppers 6 are in the number-indeterminable zones (weight ranges T and U), the combination weighing apparatus 1 performs the combination calculation without using the weighing results of the goods retained in those weigh hoppers 6. For this reason, the determination accuracy in the number conversions of the microcomputer 21 that determines the numbers of the goods from the weights of the goods can be kept high.

It will be noted that when the weight values of the goods retained in the weigh hoppers 6 end up falling into the number-indeterminable zones (weight ranges T and U), time is needed to discharge those goods as nonconforming goods, and there is concern that the capacity of the combination weighing apparatus 1 will be reduced by that amount. However, although FIG. 5 shows the widths of the weight ranges in a large manner, in reality the number-indeterminable zones (weight ranges T and U) are extremely small, and the percentage of the weight values of the goods retained in the weigh hoppers 6 that fall into the number-indeterminable zones (weight ranges T and U) is small. That is, any reduction in the capacity of the combination weighing apparatus 1 resulting from the application of this invention is small compared with the increase in the capacity of the combination weighing apparatus 1 resulting from the application of this invention.

(5-3)
In the combination weighing apparatus 1 pertaining to this embodiment, the average number of the goods supplied to each of the weigh hoppers 6 via the pool hoppers 4 from the vibratory feeders 3 in a predetermined time period is set to two times to five times a value obtained by dividing the target number by the number of the weigh hoppers 6. For example, in the eight weigh hoppers 6c1 to 6c8 to which the third goods G3 are supplied, the average number of the goods supplied every combination calculation cycle (predetermined time period) is set to 2.5 times (3.125) to 4.8 times (6.00) of "1.25," which is a value obtained by dividing the target number (ten) by the number (eight) of the weigh hoppers 6. Because of this, compared with a method in which the number of the goods supplied every combination calculation cycle is set to a maximum of 3, which is adopted in the conventional combination weighing apparatus, the probability that the combination calculation process will succeed is higher in the combination weighing apparatus 1 pertaining to this embodiment.

It will be noted that the combination calculation cycle (predetermined time period) is a time period that affects the capacity of the combination weighing apparatus 1. This predetermined time period is a time period lasting from when the goods are discharged from predetermined weigh hoppers 6 based on the combination calculation to until the next goods are supplied to the weigh hoppers 6.

(5-4)
In the combination weighing apparatus 1 pertaining to this embodiment, the target number of each of the first goods G1, the second goods G2, the third goods G3, and the fourth goods G4 is set to a number that is the same as or greater than the number of the eight weigh hoppers 6 corresponding thereto. Specifically, the number of the weigh hoppers 6 corresponding to each of the goods is "8" and the target number is set to "10." In setting the target numbers, when the conventional method of regulating the number of the goods supplied to the weigh hoppers 6 to a maximum of 3 goods every combination calculation cycle is adopted, as shown in FIG. 8A to FIG. 8D and described in the latter part of section (5-1), the combination weighing apparatus often falls into a state in which the combination calculation process will not succeed, and the capacity of the combination weighing apparatus is reduced.

However, in the combination weighing apparatus 1 pertaining to this embodiment, the number of the goods supplied every combination calculation cycle is increased over the conventional method as described in section (5-3), so a reduction in the capacity of the combination weighing apparatus is inhibited.

### (6) Example Modifications

(6-1)
Although the above embodiment does not specify an appropriate timing to discharge the goods identified as nonconforming goods in step S3 to the other apparatus downstream, when it is difficult to accurately convert the weight value of the goods to a number of the goods, it is preferred to promptly discharge the nonconforming goods. Consequently, when the other apparatus located downstream of the combination weighing apparatus 1 can handle the goods, it is preferred that the microcomputer 21 immediately discharge the goods identified as nonconforming goods from the weigh hoppers 6 before performing the combination calculation.

For example, as shown in FIG. 7E, when the weight value of the goods that have been supplied to the weigh hopper 6c2 is in a number-indeterminable zone (weight range T or U), the microcomputer 21 temporarily stops the combination calculation and discharges the goods from the weigh hopper 6c2 to the other apparatus downstream. Then, after the nonconforming goods have been discharged, the eight weigh hoppers 6c1 to 6c8 have two, zero, one, five, two, three, four, and three goods, respectively, so the combination weighing apparatus 1 can promptly return to a state in which the combination calculation process will succeed with the goods in many of the weigh hoppers 6. Furthermore, by promptly discharging the goods as nonconforming goods from the weigh hoppers 6, a situation where an incorrect number of the goods are discharged as a normal group of the goods from the combination weighing apparatus 1 is also inhibited.

(6-2)
In the above embodiment, an example was described in which this invention is applied to the combination weighing apparatus 1 that simultaneously discharges target numbers of each of the first goods G1, the second goods G2, the third goods G3, and the fourth goods G4 at a time and in which the number of the weigh hoppers 6 tends to be few relative to the target numbers. However, in addition to the combination weighing apparatus 1 that performs what is called mixed number weighing, this invention may also be applied to other apparatus that combine and measure numbers of single goods using all the weigh hoppers.

(6-3)
The above embodiment is provided with the second setting unit 26 and allows the user to set the individual weight of each of the goods, but instead of this, the microcomputer 21 may be configured to automatically calculate the individual weight of each of the goods.

### REFERENCE SIGNS LIST

- 1: Combination Weighing Apparatus
- 3: Vibratory Feeders (Supply Units)
- 6: Weigh Hoppers (Retention Units)
- 7: Weight Detectors (Weighing Units)
- 21: Microcomputer (Control Unit)

### CITATION LIST

### Patent Literature

Patent Document 1: JP-A No. 2003-240629

## Claims

1. A combination weighing apparatus comprising:
a plurality of retention units that temporarily retain and discharge goods;
weighing units that measure the weights of the goods retained in the plurality of retention units; and
a control unit that uses the weighing results of the weighing units to perform a combination calculation to decide on one or a plurality of the retention units from which to discharge the goods,
wherein the control unit
determines that the number of the goods retained in the retention unit is N when the weight of the goods retained in the retention unit is in a first range,
determines that the number of the goods retained in the retention unit is (N + 1) when the weight of the goods retained in the retention unit is in a second range, and,
when there is a third range between the first range and the second range and the weight of the goods retained in the retention unit is in the third range, performs the combination calculation without using the weighing result of the goods retained in the retention unit in which the weight is in the third range.

2. The combination weighing apparatus of claim 1, wherein the third range is a range in which an N estimation range, which is a range of weights of the goods in which the number of the goods retained in the retention unit is estimated to be N, overlaps with an (N + 1) estimation range, which is a range of weights of the goods in which the number of the goods retained in the retention unit is estimated to be (N + 1).

3. The combination weighing apparatus of claim 1 or 2, further comprising supply units that supply the goods to the plurality of retention units,
wherein
the control unit performs the combination calculation so that the total number of the goods discharged from one or a plurality of the retention units is a target number and causes the goods to be discharged from one or a plurality of the retention units, and
the average number of the goods supplied to each of the retention units from the supply units in a predetermined time period is 2 times to 5 times a value obtained by dividing the target number by the number of the retention units.

4. The combination weighing apparatus of any one of claims 1 to 3, wherein the target number is the same as or greater than the number of the retention units.

5. The combination weighing apparatus of any one of claims 1 to 4, wherein when the weight of the goods retained in the retention unit is in the third range, the control unit discharges the goods retained in the retention unit whose weight is in the third range as nonconforming goods from the retention unit.

6. The combination weighing apparatus of claim 5, wherein when the weight of the goods retained in the retention unit is in the third range, the control unit discharges the goods retained in the retention unit whose weight is in the third range as nonconforming goods from the retention unit before performing the combination calculation.
